# EUROPÄISCHE PATENTANMELDUNG

(11) **EP 2 492 047 A1**
(43) Veröffentlichungstag der Anmeldung: **29.08.2012**
(21) Anmeldenummer: 11156121.3
(22) Anmeldetag: 28.02.2011
(51) Int. Cl.: B23Q 5/10

(54) **Motorspindeleinheit mit gehäuselosem Direktantrieb**

(71) Anmelder: Siemens Aktiengesellschaft, 80333 München (DE)
(72) Erfinder: Mueller, Juergen, 97490 Poppenhausen (DE); Lang, Bernd, 97502 Euerbach (DE); Müller, Katja, 97421 Schweinfurt (DE)

(57) **Zusammenfassung**

Die Erfindung betrifft eine Motorspindeleinheit (1) mit einem gehäuselosen Direktantrieb, mit folgenden Merkmalen:
- einem Stator (2) der axial geschichtete Bleche aufweist, die mittels Statorschilden (4) an den Stirnseiten des Stators (2) und mittels am Umfang verteilten Zugankern (5) axial gespannt sind, wobei der Stator in zu einem Luftspalt des Direktantriebs weisenden Nuten ein Wicklungssystem aufweist, das an den Stirnseiten des Stators Wickelköpfe (7) ausbildet,
- einem Rotor (9), als Teil einer insbesondere hohlen Spindelwelle (10), die an ihrem einen Ende eine Werkzeugschnittstelle (11) und an ihrem anderen Ende zumindest eine Anschlussbaugruppe (13) aufweist.

## Beschreibung

Die Erfindung betrifft eine Motorspindeleinheit zur Werkstückbearbeitung, insbesondere bei Fräs- oder Drehmaschinen.

Motorspindeln sind allgemein bekannt, beispielsweise aus der DE 199 51 405 C2. Sie werden zur Werkstückbearbeitung insbesondere bei Fräs- oder Drehmaschinen eingesetzt. Stirnseitig ist an den Motorspindeln eine Werkzeugaufnahme vorgesehen. Das Werkzeug wird automatisch gewechselt und durch ein Spannsystem fixiert.

Die äußere Form der Motorspindel wird durch vorgegebene Einbaumaße der Werkzeugmaschine bestimmt. Ein wesentliches Merkmal von Motorspindeln ist somit ihre kompakte Form. In Folge dieser kompakten Bauform muss für ausreichende Kühlung u.a. des Antriebs gesorgt werden. Dazu wird häufig eine im Gehäuse des Antriebsmotors integrierte Wasserkühlung vorgesehen. Das Gehäuse des Antriebs, insbesondere der Stator ist damit gegen Verdrehung durch das Motorendrehmoment in diesem Gehäuse, das auch als Kühlhülse der Spindel ausgeführt sein kann, drehfest gesichert.

Die Gewichts-, Bearbeitungs- und Beschleunigungskräfte werden somit über die Lager und Lagerschilde als auch durch das Gehäuse und/oder die Kühlhülse des Stators aufgenommen.

Nachteilig dabei ist, dass das Gehäuse bzw. die Kühlhülse zusätzlichen Bauraum innerhalb der Werkzeugmaschine einnimmt und somit neben den aufzuwendenden Kosten für Gehäuse und/oder Kühlhülse auch den Bauraum der Aktivteile reduziert, was zu Leistungseinbußen des Antriebs führt.

Ausgehend davon liegt der Erfindung die Aufgabe zugrunde, eine Motorspindeleinheit zu schaffen, die bei zumindest gleichem Betriebsverhalten der Motorspindeleinheit mehr Leistung pro Bauraum bereitstellt. Außerdem soll der Aufbau der Motorspindeleinheit vereinfacht werden.

Die Lösung der gestellten Aufgabe gelingt durch eine Motorspindeleinheit mit einem gehäuselosen Direktantrieb, mit folgenden Merkmalen:
- einem Stator der axial geschichtete Bleche aufweist, die mittels Statorschilden an den Stirnseiten des Stators und mittels am Umfang verteilten Zugankern axial gespannt sind, wobei der Stator in zu einem Luftspalt des Direktantriebs weisenden Nuten ein Wicklungssystem aufweist, das an den Stirnseiten des Stators Wickelköpfe ausbildet,
- einem Rotor, als Teil einer insbesonderen hohlen Spindelwelle), die an ihrem einen Ende eine Werkzeugschnittstelle und an ihrem anderen Ende zumindest eine Anschlussbaugruppe aufweist.

Erfindungsgemäß werden somit Bearbeitungs- und Beschleunigungskräfte im Bereich des Stators durch Statorschilde an den Stirnseiten des Stators aufgenommen. Dies geschieht insbesondere durch die am Umfang des Stators angeordneten Zuganker, die die Statorschilde an den Stirnseiten des Stators und die Bleche des Stators miteinander verpressen. Aufgrund der axialen Verspannung durch die Zuganker können nunmehr axiale und radiale Kräfte der Motorspindeleinheit verursacht durch den Antrieb und/oder durch Bearbeitung der Werkstücke über die Statorschilde und die Zuganker übertragen und aufgenommen werden.

Damit ist nunmehr das Gehäuse zur Übertragung dieser Kräfte nicht mehr notwendig und der Aktivteil der Maschine kann dementsprechend größer dimensioniert werden. Damit sind bei gleichem Bauraum höhere Leistungsdaten des Direktantriebs möglich.

In einer weiteren Ausführungsform weist der Stator axial verlaufende Kühlkanäle auf, die zusammen mit Kühlkanälen der Statorschilde ein Kühlsystem bilden. Dabei sind sowohl Luftals auch Flüssigkeitskühlungen einsetzbar.

An den Stirnseiten des Stators befinden sich Wickelköpfe des Wicklungssystems, die vorteilhafterweise in das Kühlsystem mit eingebunden sind oder zumindest mittels eines wärmeleitenden Vergusses thermisch an die gekühlten stirnseitigen Bleche des Stators und/oder die Statorschilde angebunden sind.

Um das Betriebsverhalten der Spindelwelle positiv zu beeinflussen, d.h. eine Gleichlauf ohne überlagerte Momente zu erzeugen, werden sowohl die Kurzschlussstäbe eines Kurschlussläufers einer Asynchronmaschine, als auch die Permanentmagnete auf dem Rotor in axialer Richtung geschrägt ausgeführt.

Durch den erfindungsgemäßen Aufbau der Motorspindeleinheit vereinfacht sich die Herstellung, indem der Stator der Antriebseinheit durch einen Stanzvorgang, insbesondere Stanzpaketieren neben seiner Außen- und Innenkontur auch sämtliche Ausnehmungen für Zuganker und Kühlkanäle erhält. Dieses Blechpaket wird nunmehr, nachdem das Wicklungssystem eingelegt ist lediglich durch die Statorschilde paketiert, die letztlich auch dazu geeignet sind Lagereinheiten aufzunehmen.

Als Lagereinheit sind dabei geeignete Wälzlager, Gleitlager, hydrostatische Lager als auch Magnetlager zu verstehen.

Die Erfindung sowie weitere vorteilhafte Ausgestaltungen sind den prinzipiell dargestellten Ausführungsbeispielen zu entnehmen. Darin zeigen:
- FIG 1: einen Längsschnitt eines Stators,
- FIG 2: einen Längsschnitt einer Motorspindeleinheit,
- FIG 3: eine perspektivische Darstellung einer Motorspindeleinheit und
- FIG 4: einen Querschnitt durch den Stator.

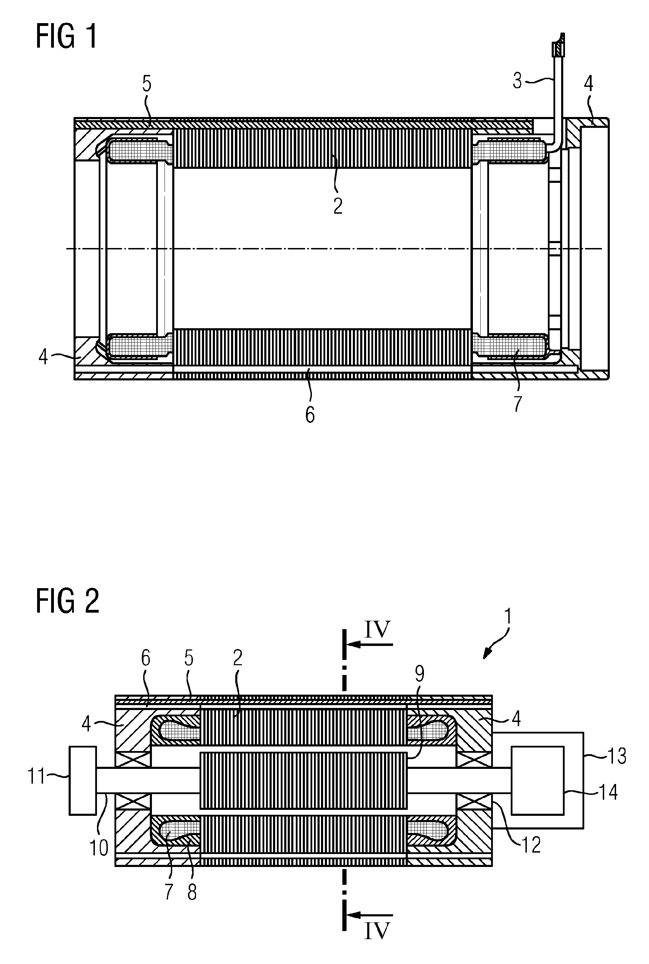

FIG 1 zeigt einen Stator 2 eines gehäuselosen Direktantriebs einer nicht näher dargestellten Motorspindeleinheit 1, die an ihren Stirnseiten Wickelköpfe 7 ausbildet, die Teil eines in Nuten des Blechpakets des Stators 2 verlaufenden Wicklungssystems darstellen. An den Stirnseiten des geblechten Stators 2, befinden sich Statorschilde 4, die über Zuganker 5 gegeneinander verpresst sind. Damit sind u.a. Kräfte von der einen Seite des Stators 2 über das Blechpaket auf die andere Seite des Stators 2 übertragbar.

Vorzugsweise sind die Statorschilde 4 aufgrund der zu übertragenden Kräfte massiv ausgeführt.

Des Weiteren zeigt FIG 1 in prinzipieller Darstellung einen Kühlkanal 6, der in den Statorschilde 4 und dem Stator 2 verläuft. In diesen Kühlkanälen 6, die vorteilhafterweise in Umfangsrichtung betrachtet achsparallele Bohrungen im Blechpaket des Stators 2 darstellen, kann Luft oder eine Flüssigkeit geführt werden. Statorschilde 4 und Stator 2 werden somit durch ein gemeinsames Kühlsystem gekühlt.

In einer weiteren Ausführungsform nicht näher dargestellten Ausführungsform sind die Statorschilde 4 mit einer eigenen Flüssigkeitskühlung versehen, während der Stator 2 eine eigene Flüssigkeits- oder Luftkühlung aufweist. Damit ist eine verbesserte Anpassung an die jeweiligen thermischen Verhältnisse der Motorspindeleinheit 1 möglich.

Des Weiteren zeigt FIG 1 elektrische Anschlussleitungen 3, die dem Wicklungssystem des Stators 2 der Motorspindeleinheit 1 elektrische Leistung zuführen. Die Anschlussleitungen 3 sind mit einem nicht näher dargestellten Umrichter kontaktiert, der einen drehzahlgesteuerten Betrieb der Motorspindeleinheit 1 ermöglicht.

Vorteilhafterweise ist der Umrichter am Stators 2 angeordnet. Durch den nunmehr zugewonnenen Bauraum aufgrund des nicht mehr notwendigen Gehäuses bzw. einer Kühlhülse, kann nun bei gleicher Ausgangsleistung des Antriebs, der Umrichter auf dem Stator 2 bzw. in axialer Verlängerung des Stators 2 direkt am Statorschild 4 also spindelintegriert angebracht sein.

FIG 2 zeigt in einer prinzipiellen Darstellung die Motorspindeleinheit 1 mit einem Stator 2 und einem Rotor 9, der mit einer Spindelwelle 10 drehfest verbunden ist. Die Spindelwelle 10 weist an ihrem einen Ende eine Werkzeugschnittstelle 11 für Fräs- oder Schleifwerkzeuge auf. An ihrem anderen Ende ist eine Anschlussbaugruppe 13 vorgesehen, die unter anderem einen Werkzeugspanner 14, Drehgeber und/oder weitere Steuerungseinrichtungen und Antriebskomponenten wie Umrichter enthalten. In der Anschlussbaugruppe 13 verlaufen auch die Daten sämtliche Sensoren zusammen, die in der Werkzeugschnittstelle 11, dem gehäuselosen Direktantrieb oder auch in den Lagern angeordnet sind und für ordnungsgemäßen Betrieb der Motorspindeleinheit 1 notwendig sind.

Diese Sensoren nehmen u.a. Temperaturen des Direktantriebs der Lager und Schwingungen, insbesondere von Werkzeugen an der Werkzeugschnittstelle 11 auf.

Die Statorschilde 4 umgreifen dabei die Wickelköpfe 7, so dass in dem dazwischen befindlichen Raum ein Wickelkopfverguss vorgesehen werden kann, der zur Entwärmung des Wickelkopfes 7 beiträgt.

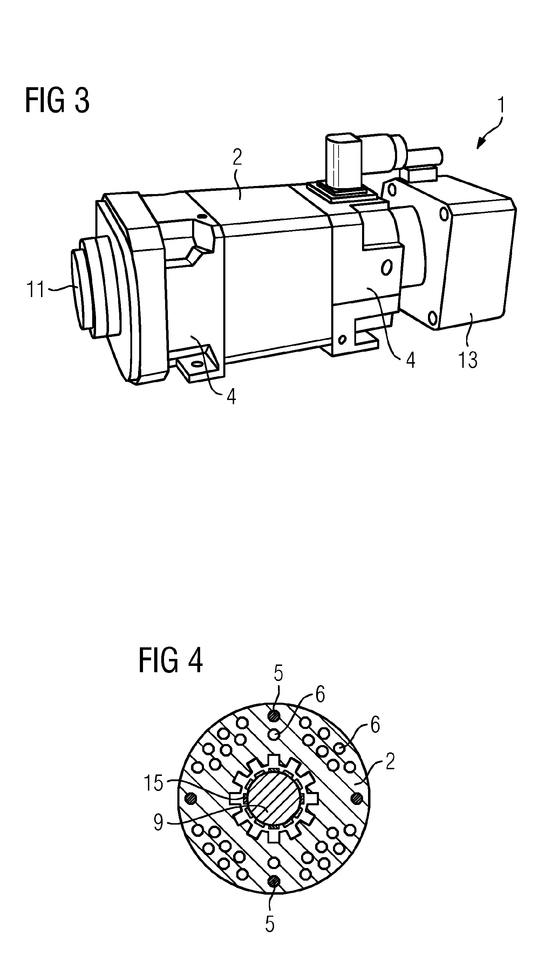

FIG 3 zeigt in einer perspektivischen Darstellung die Motorspindeleinheit 1 mit ihrem gehäuselosen Direktantrieb und den an der Stirnseite befindlichen Statorschilden 4, die über Zuganker 5 gegeneinander verpresst sind. An die Statorschilde 4 schließen sich in axialer Richtung, an der jeweils dem Stator 2 abgewandten Seite die Werkzeugschnittstelle 11 als auch die Anschlussbaugruppe 13 an. Dieser kompakte Aufbau wird insbesondere durch den gehäuselosen Direktantrieb gewährleistet.

FIG 4 zeigt einen Querschnitt eines gehäuselosen Direktantriebs der Motorspindeleinheit 1. Dabei zeigt der Stator 2 die Anordnung der in Umfangsrichtung verteilten Zuganker 5, in diesem besonderen Ausführungsbeispiel vier Zuganker, die aber je nach mechanischen Anforderungen in ihrer Anzahl reduziert oder erhöht werden können. Dazu sind dann im Stanzwerkzeug die dafür notwendigen Maßnahmen zu treffen und die die Statorschilde 4 für die Lager anzupassen.

Die Ausnehmungen im Blechpaket des Stators 2 zur Aufnahme der Zuganker sind je nach mechanischer Anforderung auch an der Außenkontur des Stators 2 anzuordnen. Dabei weisen dann die Ausnehmungen einen axial verlaufenden Schlitz auf.

Des Weiteren sind im Blechpaket des Stators 2 Kühlkanäle 6 vorgesehen, die für die Luftführung oder eine Flüssigkeitsführung geeignet sind. Bei einer Flüssigkeitskühlung ist es besonders vorteilhaft, wenn in den Kühlkanälen 6 Rohre setzt sind, um ggf. Eindringen von Flüssigkeit in das Wicklungssystem zu vermeiden.

Der Rotor 9 weist an seiner Oberfläche Permanentmagnete 15 auf, die aber ebenso in axial verlaufenden Taschen in der Spindelwelle 10 angeordnet sein können.

## Patentansprüche

1. Motorspindeleinheit (1) mit einem gehäuselosen Direktantrieb, mit folgenden Merkmalen:
- einem Stator (2) der axial geschichtete Bleche aufweist, die mittels Statorschilden (4) an den Stirnseiten des Stators (2) und mittels am Umfang verteilten Zugankern (5) axial gespannt sind, wobei der Stator in zu einem Luftspalt des Direktantriebs weisenden Nuten ein Wicklungssystem aufweist, das an den Stirnseiten des Stators Wickelköpfe (7) ausbildet,
- einem Rotor (9), als Teil einer insbesondere hohlen Spindelwelle (10), die an ihrem einen Ende eine Werkzeugschnittstelle (11) und an ihrem anderen Ende zumindest eine Anschlussbaugruppe (13) aufweist.

2. Motorspindeleinheit (1) nach Anspruch 1, **dadurch gekennzeichnet , dass** der Rotor (9) als Käfigläufer einer Asynchronmaschine ausgeführt ist oder dass der Rotor (9) als Teil eines permanenterregten Synchronmotors ausgeführt ist, derart, dass ein im Bereich des Stators vorgesehener Abschnitt der Spindelwelle (10), mit Permanentmagneten versehen ist.

3. Motorspindeleinheit (1)nach Anspruch 2, **dadurch gekennzeichnet , dass** bei dem Rotor (9) sowohl die Stäbe des Käfigläufers als auch die Permanentmagnete in ihrem axialen Verlauf geschrägt ausführt sind.

4. Motorspindeleinheit (1) nach einem der vorhergehenden Ansprüche, **dadurch gekennzeichnet ,**
**dass** der Stator (2) und/oder die Statorschilde (4) eine Kühlvorrichtung aufweisen.

5. Motorspindeleinheit (1) nach Anspruch 4, **dadurch gekennzeichnet , dass** der Stator (2) und/oder die Statorschilde (4) Kühlbohrungen zur Luft- bzw. Flüssigkeitskühlung aufweisen.
